Europäisches Patentamt

European Patent Office

Office européen des brevets

(11) Veröffentlichungsnummer: **0 272 569**
**A2**

## (12) EUROPÄISCHE PATENTANMELDUNG

(21) Anmeldenummer: **87118451.1**

(22) Anmeldetag: **12.12.87**

(51) Int. Cl.⁴: **C07F 9/11**

(30) Priorität: **20.12.86 DE 3643761**

(43) Veröffentlichungstag der Anmeldung:
**29.06.88 Patentblatt 88/26**

(84) Benannte Vertragsstaaten:
**AT BE CH DE ES FR GB GR IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Uphues, Günter**
**Robert-Koch-Strasse 45**
**D-4019 Monheim(DE)**
Erfinder: **Ploog, Uwe, Dr.**
**Haydnweg 6**
**D-5657 Haan(DE)**

(54) **Reinigung von Phosphorsäureestern.**

(57) Die Erfindung betrifft ein Verfahren zum Reinigen von Phosphorsäurepartialester-Gemischen, wobei man nach Zusatz einer basischen, nichtflüchtigen, anorganischen oder organischen Verbindung den unumgesetzten Fettalkohol mittels Destillation direkt aus dem Partialestergemisch entfernt.

EP 0 272 569 A2

## Reinigung von Phosphorsäureestern

Die vorliegende Erfindung betrifft die Reinigung von Phosphorsäurepartialester-Gemischen, die durch Umsetzung von Fettalkoholen mit Phosphorpentoxid hergestellt werden.

Von den weltweit produzierten Phosphorsäureestern dominieren die durch Umsetzung von Phosphorpentoxid mit Alkoholen erhaltenen Gemische aus Mono-und Dialkylderivaten.

Der Reaktionsmechanismus ist bis zum heutigen Tage noch nicht verbindlich exakt geklärt. Ebenso gilt die heute postulierte Summenformel für Phosphorpentoxid -$P_4O_{10}$-als nicht gesichert.

T. Fay, G.P. Sheridan und D. R. Karsa, Kommittee Espanol de la Detergentes, XII. Jornado (1981) weisen darauf hin, daß das üblicherweise in den Handel gelangende Phosphorpentoxid große Mengen hochpolymeren Materials enthält und daher die Formel $P_2O_5$ beibehalten werden sollte.

Bei der Herstellung von Phosphorsäureestern, vor allem durch die Reaktion von Fettalkoholen mit Phosphorpent oxid, enthalten die Produkte, je nach molarem Einsatzverhältnis, unterschiedlich große Mengen nichtumgesetzten Alkohols, der in vielen Fällen die Anwendung der Produkte beeinträchtigt und daher fast immer unerwünscht ist. Die Entfernung des freien Alkohols ist nur durch umständliche, zeitaufwendige Maßnahmen möglich.

K. Sasse, in "Houben-Weyl", Band 12, "Organische Phosphorverbindungen", Teil 2, Seite 156 ff beschreibt die Bildung von Phosphorsäurepartialestern durch Einwirkung von Alkoholen auf Phosphorpentoxid. Die Abtrennung der freien Phosphorsäure aus dem Reaktionsprodukt erfolgt normalerweise über die Barium-, oder, bei längerkettigen Alkoholen, über die Natriumsalze. Zur Phosphorylierung von Zuckern mit Phosphorpentoxid arbeitet man in Gegenwart tertiärer Amine bei erhöhter Temperatur.

Die direkte destillative Abtrennung des freien Alkohols scheitert an einer Olefinabspaltung aus den Estern. Bei kurzkettigen Alkoholen wird die Olefinbildung sogar zur Hauptreaktion. Chemical Abstracts, 95, 22 1704 w beschreibt die Neutralisation von aliphatischen Phosphorsäureestern mit einer wässrigen Alkanolaminlösung und anschließende Extraktion des nichtionischen Materials durch ein niedrigsiedendes Paraffin.

DE-OS 33 25 337 betrifft ein Verfahren zur Herstellung von Phosphorsäurediestern, wobei man einem Partialestergemisch eine Base in einer Menge von 0,5 bis 1,3 Äquivalenten, bezogen auf in der Mischung enthaltenen Phosphoratome, zusetzt. Die Phosphorsäuremonoester werden durch Hydrolyse in wässriger Lösung in o-Phosphorsäure und organische Hydroxylverbindungen überführt und nach dieser Reaktionsstufe im Falle von niedrigsiedenden Alkoholen durch Destillation oder bei längerkettigen Alkoholen durch fraktionierte Kristallisation entfernt. Man erhält Phosphorsäurediester, die noch freien, nicht umgesetzten Alkohol enthalten können.

Der vorliegenden Erfindung lag die Aufgabe zugrunde, ein einfaches Verfahren zu entwickeln, das es ermöglicht, den in Phosphorsäureestergemischen noch vorhandenen Alkohol ohne Zersetzung der gebildeten Ester zu entfernen.

Es wurde nun überraschend gefunden, daß die Entstehung von Olefinen praktisch vollständig unterbleibt, wenn man dem Partialestergemisch geringe Mengen (0,05 bis 0,2 Moläquivalente, bezogen auf in der Mischung enthaltene Menge Phosphoratome) einer basischen, nichtflüchtigen anorganischen oder organischen Verbindung vor oder bevorzugt nach der Umsetzung zugibt und den unumgesetzten Fettalkohol mittels Destillation direkt aus dem Gemisch entfernt. Auf diese Weise wird die thermische Belastbarkeit der Phosphorsäureester so umfassend erhöht, daß vor allem auch längerkettige Fettalkohole mittels Destillation aus dem Gemisch entfernt werden können. Die thermische Stabilität ist selbst bei Temperaturen von 180 bis 200°C noch gegeben.

Die vorliegende Erfindung stellt ein Verfahren zur Reinigung von Phosphorsäurepartialestern bereit, die in an sich bekannter Weise durch Umsetzung eines oder Gemische von Fettalkoholen mit Phosphorpentoxid hergestellt werden. Als Fettalkohole im Sinne der vorliegenden Erfindung werden Alkohole mit 6 bis 18 C-Atomen und insbesondere geradkettige oder verzweigtkettige Alkohole mit 8 bis 12 C-Atomen verstanden. Fettalkohole gemäß der vorliegenden Erfindung sind vorzugsweise ausgewählt aus der aus Hexylalkohol, 2-Ethylhexylalkohol, Heptylalkohol, Octylalkohol, Nonylalkohol, Isononylalkohol, Decylalkohol, Isodecylalkohol, Undecylalkohol, Dodecylalkohol, Tridecylalkohol, Isotridecylalkohol, Tetradecylalkohol, Pentadecylalkohol, Hexadecylalkohol, Heptadecylalkohol, Octadecylalkohol, Oleylalkohol, Elaidylalkohol und Isostearylalkohol bestehenden Gruppe.

Aufgrund der hohen Siedepunkte der eingesetzten Alkohole wird die Destillation vorzugsweise unter leichtem Vakuum durchgeführt. Insbesondere bevorzugt wird die Destillation bei 0,1 bis 50 mbar durchgeführt.

Die dem Partialestergemisch in Mengen von 0,05 bis 0,2 Moläquivalenten, bezogen auf die in der Mischung enthaltenen Phosphoratome, zugesetzten basischen, nichtflüchtigen, anorganischen oder organischen Verbindungen sind ausgewählt aus der Gruppe der Alkalihydroxide, wie Kaliumhydroxid und Natriumhydroxid sowie Alkanolamine und Amine im Molekulargewichtsbereich von 129 bis 297.

Vorzugsweise werden die basischen Verbindungen in Mengen von 0,1 Moläquivalenten, bezogen auf die in der Mischung enthaltenen Phosphoratome, den Partialestergemischen zugesetzt.

Die Vorteile der vorliegenden Erfindung werden bei der Analyse des Destillats deutlich. Ohne den erfindungs gemäßen Zusatz der basischen, nichtflüchtigen Verbindungen sind die Mengen an Destillat gegenüber dem erfindungsgemäßen Verfahren vergrößert. Zudem weist das Destillat ohne Zusatz der basischen, nichtflüchtigen Verbindungen eine mindestens zehnfach erhöhte Jodzahl auf.

Beispiel A

In einem mit Rührer und Thermometer versehenen 1000 ml-Dreihalskolben wurden 594,0 g (4,5 Mol) n-Octanol (OHZ = 424) vorgelegt und erwärmt. Bei einer Temperatur von 50 bis 60 °C wurden mit Hilfe eines gegen Luftfeuchtigkeit verschlossenen Pulverdosiergerätes gleichmäßig innerhalb von 2 h 213,0 g (1,5 Mol) Phosphorpentoxid zugesetzt. Anschließend ließ man 2 h bei 90 °C nachreagieren. Nach Zugabe von 31 g Wasser wurde weitere 3 h bei 90 °C gerührt.

Man erhielt 837 g eines farblosen Öls.

Die Analyse (Passage über Ionenaustauscher) ergab einen Gehalt von 7,8 % nicht umgesetzten Alkohols.

Beispiel 1

200,0 g (0,72 Äquivalente P) des nach Beipsiel 1 erhaltenen Phosphorsäureesters wurden mit 16,6 g (0,07 Mol) Dimethylkokosamin versetzt und einer Destillation im Vakuum unterworfen. Bei einem Druck von 20 mbar wurde bis zu einer Sumpftemperatur von 170°C aufgeheizt.

Dabei wurden 15,2 g Destillat mit einer Jodzahl von 1,6 erhalten. Im Kolben verblieben 199,8 g eines fast farblosen Rückstandes mit einem Gehalt von 0,2 % an n-Octanol.

Unter den gleichen Bedingungen wurden die folgenden Ergebnisse erzielt:

| Bsp. | Zusatz | Mol/P | Destillat | | Rückstand |
| | | | Menge (g) | JZ | Menge (g) |
| --- | --- | --- | --- | --- | --- |
| 2 | Kaliumhydroxid | 0,1 | 14,8 | 1,3 | 187,9 |
| 3 | Diethanolamin | 0,2 | 14,1 | 1,1 | 186,3 |
| 4 | Kokosamin | 0,2 | 13,8 | 1,5 | 208,1 |
| 5 | Tributylamin | 0,1 | 13,1 | 1,4 | 194,4 |
| 6 | N-Lauryldiamino-propan | 0,1 | 14,9 | 3,1 | 193,7 |

## Vergleichsbeispiel 1

200,0 g des nach Beispiel A erhaltenen Phosphorsäureesters wurden ohne Verwendung eines erfindungsgemäßen Zusatzes ebenfalls der destillativen Behandlung im Vakuum unterworfen.

Nachdem bereits 23,8 g Destillat angefallen waren, wurde die Beheizung unterbrochen, obwohl die Destillation noch nicht beendet war. Die Analyse des Destillats ergab eine Jodzahl von ͟ 15; die Rückstandsmenge betrug 175,2 g bei einem Restgehalt von 2,4 % n-Octanol.

## Beispiel B

In einem wie im Beispiel 1 bestückten 500 ml-Dreihalskolben wurden 231,0 g (1,75 Mol) n-Octanol (OHZ = 425) mit 71,0 g (0,5 Mol) Phosphorpentoxid umgesetzt. Die Reaktionstemperatur wärhend der 2-stündigen Dosierung betrug 80 bis 90 °C. Nach einer Nachrührzeit von 2 h bei 100 °C wurde mit 11,1 g Wasser vesetzt und weitere 3 h bei 100 °C gerührt.

Es wurden 312 g eines gelblich gefärbten Öls erhalten, das noch 14,8 % n-Octanol enthielt.

## Beispiel 7

200,0 g des nach Beispiel B erhaltenen Phosphorsäureesters wurden mit 30,4 g (0,2 Mol/P) Dimethylkokosamin versetzt und zur Entfernung des nicht umgesetzten Alkohols einer Vakuumdestillation bei 20 mbar unterworfen. Die maximale Sumpftemperatur betrug 172 °C. Insgesamt wurden 28,8 g Destillat mit einer Jodzahl von 2,0 gebildet.

## Vergleichsbeispiel 2

200,0 g des nach Beispiel B erhaltenen Esters wurden ohne erfindungsgemäßen Zusatz analog Beispiel 7 behandelt. Dabei entstanden 34,2 g Destillat mit einer Jodzahl von 46,3.

## Beispiel C

In einem wie im Beispiel A bestückten 2 l-Dreihalskolben wurden 780 g (6 Mol) 2-Ethylhexanol mit 284 g (2 Mol) Phosphorpentoxid bei 50 bis 60 °C umgesetzt. Nach einer 2-stündigen Nachrührzeit wurden 36 g Wasser zugesetzt und 3 h damit bei 90 °C behandelt.

Es wurden 1103 g einer gelblichen Flüssigkeit erhalten, die noch 13 % nicht umgesetzten Alkohol enthielt.

## Beispiel 8

550 g des nach Beispiel C erhaltenen Esters wurden mit 0,2 Mol Kaliumhydroxid/P in Form einer 45 %igen Lösung versetzt.

Bis zu einer Sumpftemperatur von 160 °C wurde bei einem Druck von 20 mbar der freie Alkohol abdestilliert.

Es wurden 70,2 g Destillat mit einer Jodzahl von 1,2 erhalten.

## Beispiel D

In einem wie im Beispiel A bestückten 1 l-Dreihalskolben wurden 390 g (1,5 Mol) Talgalkohol mit 71 g (0,5 Mol) Phosphorpentoxid bei 60 bis 70 °C umgesetzt, 2 h bei 70 °C nachgerührt und anschließend nach Zusatz von 10 g Wasser weitere 3 h bei 90 °C gehalten.

Es wurden 471 g einer bei Raumtemperatur festen, weißen Masse erhalten, die noch 18,1 % nicht umgesetzten Alkohol enthielt.

Beispiel 9

200 g des nach Beispiel D erhaltenen Esters wurden mit 10,1 g (0,1 Mol/P) Dimethylkokosamin gemischt und bei 180 °C und einem Druck von 10 ¹ mbar über einen Dünnschichtverdampfer geschickt.

Es wurden 34,8 g Destillat mit einer Jodzahl von 1,3 erhalten.

**Ansprüche**

1. Verfahren zum Reinigen von Phosphorsäurepartialester-Gemischen, die in an sich bekannter Weise durch Umsetzung eines oder Gemische von 6 bis 18 C-Atomen enthaltenden Fettalkoholen mit Phosphorpentoxid hergestellt werden, dadurch gekennzeichnet, daß man dem Estergemisch vor oder bevorzugt nach der Umsetzung 0,05 bis 0,2 Moläquivalente, bezogen auf die in der Mischung enthaltenen Phosphoratome einer basischen, nichtflüchtigen, anorganischen oder organischen Verbindung zugibt und den unumgesetzten Fettalkohol mittels Destillation aus dem Partialestergemisch entfernt.

2. Verfahren nach Anspruch 1, dadurch gekennzeichnet, daß die basische, nichtflüchtige Verbindung ausgewählt ist aus der Gruppe der Alkalihydroxide, vorzugsweise Kaliumhydroxid und Natriumhydroxid, sowie Alkanolamine und Amine im Molekulargewichtsbereich von 129 bis 297.

3. Verfahren nach Anspruch 1, dadurch gekennzeichnet, daß die basische, nichtflüchtige anorganische oder organische Verbindung in einer Menge von 0,1 Moläquivalenten, bezogen auf die in der Mischung enthaltene Menge an Phosphoratomen, zugegeben wird.

4. Verfahren nach Anspruch 1, dadurch gekennzeichnet, daß der Fettalkohol ausgewählt ist aus der aus Hexylalkohol, 2-Ethylhexylalkohol, Heptylalkohol, Octylalkohol, Nonylalkohol, Isononylalkohol, Decylalkohol, Isodecylalkohol, Undecylalkohol, Dodecylalkohol, Tridecylalkohol, Isotridecylalkohol, Tetradecylalkohol, Pentadecylalkohol, Hexadecylalkohol, Heptadecylalkohol, Octadecylalkohol, Oleylalkohol, Elaidylalkohol und Isostearylalkohol bestehenden Gruppe.

5. Verfahren nach Anspruch 1, dadurch gekennzeichnet, daß der Fettalkohol 8 bis 18 C-Atomen aufweist und geradkettig oder verzweigtkettig ist.

6. Verfahren nach Ansprüchen 1 bis 5, dadurch gekennzeichnet, daß die Destillation unter Vakuum durchgeführt wird.

7. Verfahren nach Anspruch 6, dadurch gekennzeichnet, daß die Destillation bei 0,1 bis 50 mbar durchgeführt wird.

8. Verfahren nach Ansprüchen 1 bis 7, dadurch gekennzeichnet, daß die Destillation bis zu einer Sumpftemperatur von 200 °C durchgeführt wird.